# EUROPÄISCHE PATENTSCHRIFT

(11) **EP 2 765 168 B1**
(45) Veröffentlichungstag und Bekanntmachung des Hinweises auf die Patenterteilung: **03.10.2018**
(21) Anmeldenummer: 14153812.4
(22) Anmeldetag: 04.02.2014
(51) Int. Cl.: C09J 7/10, C09J 7/38, C08J 5/18

(54) **Geschäumtes Klebeband**
Foamed adhesive tape
Bande adhésive expansée

(30) Priorität: 07.02.2013 DE 102013202032
(43) Veröffentlichungstag der Anmeldung: 13.08.2014
(73) Patentinhaber: tesa SE, 22848 Norderstedt (DE)
(72) Erfinder: Tach, Michael, 22549 Hamburg (DE)

(56) Entgegenhaltungen:
- EP-A1- 2 298 844
- EP-A2- 1 310 446
- WO-A2-2012/088538
- DD-A1- 260 530
- "Sicherheitsdatenblatt tesa 5559", , 26. Januar 2010 (2010-01-26), Seiten 1-5, XP055114480, Gefunden im Internet: URL:http://files.voelkner.de/525000-549999 /541873-si-01-de-TESAMOLL_STANDARD_SCHAUMS TOFF_WEISS_6M.pdf [gefunden am 2014-04-17] -& "Produktinformation Tesamoll Standard I-Profil", , 17. April 2014 (2014-04-17), Seiten 1-2, XP055114479, Gefunden im Internet: URL:http://www.tesa.de/consumer/energiespa ren_mit_tesa/tipps/tesamoll_standard_iprof il,c.html [gefunden am 2014-04-17]

## Beschreibung

Die Erfindung betrifft das technische Gebiet der Klebebänder, wie sie zum temporären oder langfristigen Verbinden einer Vielzahl von Substraten, beispielsweise von Bauteilen, verwendet werden. Speziell sind Klebebänder mit geschäumten Haftklebemassen geringer Breite betroffen, die vorzugsweise in Form planarer Tellerrollen von Mutterrollen abgetrennt werden können. Mit den so hergestellten schmalen, geschäumten Klebebändern können unter anderem sehr enge Fugen passgenau abgedichtet werden sowie sehr kleine mit den Klebebändern fixierte Bauteile mechanisch gepuffert werden, indem kinetische Energie von dem geschäumten Massesystem absorbiert wird.

Für diverse Anwendungsgebiete, beispielsweise im Bausektor, in der industriellen Fertigung von technischen Produkten oder für Montagezwecke, werden zunehmend dicke, stark klebende Klebebänder (zum Beispiel so genannte "Montageklebebänder") benötigt. Da die Verklebungen oder Abdichtungen häufig im Außenbereich stattfinden und die verklebten Produkte somit den Witterungseinflüssen ausgesetzt sind, sind die Erwartungen an die Eigenschaften derartiger Klebebänder hoch: So soll die Verklebung stark, dauerhaft und witterungsbeständig sein und ferner häufig eine hohe Feuchtigkeits-, Wärme- und Feuchtwärmebeständigkeit aufweisen. Zusätzlich sollten die Klebebänder Unebenheiten in der Verklebungsfuge oder auf den zu verklebenden Untergründen ausgleichen können, und zunehmend wird auch für dicke Klebebänder eine hohe Transparenz gewünscht, etwa im Bereich der Verklebung von transparenten Materialien wie Gläsern oder bestimmten Kunststoffen.

Die Klebebänder, die für derartige Zwecke eingesetzt werden, sind für gewöhnlich mit Klebemassen ausgerüstet, bei denen die klebtechnischen Eigenschaften sehr gut aufeinander abgestimmt sein müssen. So müssen Kohäsion, Anfassklebrigkeit (auch als "Tack" bezeichnet), Fließverhalten und andere Eigenschaften sehr genau justiert werden. Da die technischen Ausformungen der Haftklebemasse, die die Leistung des Klebebandes beeinflussen, auf die einzelnen Eigenschaften häufig gegenläufige Auswirkungen haben, ist die Abstimmung in der Regel schwierig, und häufig müssen Kompromisse im Ergebnis hingenommen werden.

Stoffe mit für Haftklebeanwendungen geeigneten viskoelastischen Eigenschaften zeichnen sich dadurch aus, dass sie bei mechanischer Deformation sowohl viskos fließen als auch elastische Rückstellkräfte aufbauen. Beide Prozesse stehen hinsichtlich ihres jeweiligen Anteils in einem bestimmten Verhältnis zueinander, abhängig sowohl von der genauen Zusammensetzung, der Struktur und dem Vernetzungsgrad des betreffenden Stoffes als auch von der Geschwindigkeit und Dauer der Deformation sowie von der Temperatur.

Der anteilige viskose Fluss ist zur Erzielung von Adhäsion notwendig. Nur die viskosen Anteile, hervorgerufen durch Makromoleküle mit relativ großer Beweglichkeit, ermöglichen eine gute Benetzung und ein gutes Auffließen auf das zu verklebende Substrat. Ein hoher Anteil an viskosem Fluss führt zu einer hohen Eigenklebrigkeit (auch als Haftklebrigkeit oder als Tack bezeichnet) und damit oft auch zu einer hohen Klebkraft. Stark vernetzte Systeme, kristalline oder glasartig erstarrte Polymere sind mangels fließfähiger Anteile in der Regel nicht eigenklebrig.

Die anteiligen elastischen Rückstellkräfte sind zur Erzielung von Kohäsion notwendig. Sie werden zum Beispiel durch sehr langkettige und stark verknäuelte sowie durch physikalisch oder chemisch vernetzte Makromoleküle hervorgerufen und ermöglichen die Übertragung der auf eine Klebverbindung angreifenden Kräfte. Sie führen dazu, dass eine Klebverbindung einer auf sie einwirkenden Dauerbelastung, zum Beispiel in Form einer dauerhaften Scherbelastung, in ausreichendem Maße über einen längeren Zeitraum standhalten kann.

Um ein Abfließen (ein Herunterlaufen) der Haftklebemassen vom Substrat zu verhindern und eine genügende Stabilität der Haftklebemasse im Klebeverbund zu garantieren, ist also eine hinreichende Kohäsion der Haftklebemassen erforderlich. Für gute Adhäsionseigenschaften müssen die Haftklebemassen aber andererseits in der Lage sein, auf das Substrat aufzufließen und eine hinreichende Benetzung der Substratoberfläche zu garantieren.

Um Brüche innerhalb der Verklebungsfuge (innerhalb der Haftklebemassenschicht) zu vermeiden, ist zudem eine gewisse Elastizität der Haftklebemasse erforderlich. Dieses Erfordernis wird insbesondere dann bedeutsam, wenn die zu verklebenden Substrate ein unterschiedliches Verhalten bei Temperatureinwirkung zeigen, das sich beispielsweise in unterschiedlichen thermischen Ausdehnungskoeffizienten äußern kann. In einem solchen Fall sind Klebebänder gefragt, welche die resultierenden Spannungen in der Klebefuge ausgleichen und dennoch ihre klebenden Eigenschaften beibehalten können.

Im Stand der Technik sind Klebebänder beschrieben, mit denen versucht wurde, einem derartigen Anforderungsprofil zu entsprechen. WO 2006/027387 A1 betrifft beispielsweise ein Verfahren zur Herstellung eines Klebebandes mit ein- oder beidseitiger vernetzter Acrylatschmelzhaftkleberschicht, bei welchem in der Schmelze zu einem primäre Hydroxygruppen aufweisenden Acrylatcopolymer ein thermischer Vernetzer zugesetzt wird und das Polyacrylat nach Aufbringung auf eine bahnförmige Schicht homogen vernetzt wird.

EP 1 978 069 A1 beschreibt ein Vernetzer-Beschleuniger-System für die thermische Vernetzung von Polyacrylaten, wobei die Vernetzung über Epoxidgruppen erfolgen soll. Die Schrift stellt im Wesentlichen auf Vorteile bei der Verarbeitung von Polyacrylatmassen aus der Schmelze ab.

DD 260 530 A1 hat ein Verfahren zum Abtrennen extrem schmaler Klebebänder von breiten konfektionierten Klebebändern zum Gegenstand und schlägt vor, das Grundmaterial mit einem geeigneten Kühlmittel zu unterkühlen, bis die haftende Wirkung der aktiven Klebeschicht aufgehoben und das zu trennende Klebeband hart geworden ist. Damit soll ein sehr sauberes Trennen unter Anwendung bekannter, mechanischer Trennverfahren ermöglicht werden.

Zunehmend rücken Anwendungen in den Blickpunkt, in denen die Klebefugen oder die abzudichtenden bzw. miteinander zu verbindenden Teile immer kleinere Dimensionen aufweisen und vorzugsweise auch über längere Zeit beständig gegenüber erheblichen thermischen Beanspruchungen sein sollen.

Es besteht ein anhaltender Bedarf an Klebebändern, die auch für diese Anwendungen unter den genannten Bedingungen dauerhaft stabile Verklebungen ermöglichen. Darüber hinaus sollen die Klebebänder automatisiert von der Rolle verklebbar bzw. im Herstellungsprozess leicht aus einer größeren Rolle zu separieren sein.

Aufgabe der Erfindung ist es daher, ein Verfahren zur Herstellung eines Klebebandes zur Verfügung zu stellen, das eine Verklebung sehr enger Fugen oder sehr kleiner Bauteile im Millimeterbereich, vorzugsweise eine automatisierte Verklebung von einer Tellerrolle, erlaubt. Vorzugsweise sollen diese Klebebänder zugleich bei starker und anhaltender thermischer Beanspruchung dauerhaft Substrate miteinander verbinden, die sich unter Temperatureinwirkung unterschiedlich verhalten und/oder im Falle einer Verwendung als Dichtmaterial auch unter starker Hitzeeinwirkung und damit verbundener Änderung der Ausdehnung der abzudichtenden Stelle diese zuverlässig weiter abdichten.

Die Aufgabe wird durch ein Verfahren zur Herstellung eines Klebebandes nach Anspruch 1 gelöst. Das erfindungsgemäß hergestellte Klebeband umfasst mindestens eine Haftklebeschicht eines geschäumten Massesystems, wobei das Klebeband eine Höhe (auch als Dicke bezeichnet) von mindestens 150 µm, insbesondere von 200 bis 5000 µm, und eine Klebebandbreite von kleiner 10 mm aufweist, insbesondere kleiner gleich 9 bis 4 mm, bevorzugt kleiner gleich 8 mm, besonders bevorzugt kleiner gleich 7 mm, insbesondere von kleiner gleich 6 mm, wobei das Massesystem in Bezug auf die Gesamtmasse des Massesystems zu größer gleich 30 Gew.-% mindestens ein Polymer enthält.

Bevorzugt besteht das Klebeband aus einer Haftklebeschicht eines geschäumten Massesystems und weist eine Höhe (auch als Dicke bezeichnet) von mindestens 150 µm, insbesondere von 200 bis 5000 µm, und eine Klebebandbreite von kleiner 10 mm auf. Derartige Klebebänder umfassen keinen separaten Träger und sind zu Mutter- oder Tellerrollen auf sich selbst aufgewickelt.

Ein besonders bevorzugtes Klebeband umfasst eine Haftklebemasse eines geschäumten Massesystems, in dem (i) mindestens ein Polymer ausgewählt ist aus der Gruppe Poly(meth)acrylate, Synthesekautschuke, Vinylaromatenblockcopolymere, Polyolefine und Mischungen aus zwei oder mehreren der vorstehenden Polymere und/oder das geschäumte Massesystem (ii) zumindest teilweise expandierte und/oder vollständig expandierte Mikroballons umfasst.

Bevorzugt ist das Klebeband ein Klebeband mit einer Klebebandbreite von kleiner gleich 10 mm, das von einer Tellerrolle abgerollt wird oder in Form einer Tellerrolle vorliegt und davon abgerollt wird. Unter einer Tellerrolle wird ein in Form einer archimedischen Spirale aufgerolltes Klebeband verstanden, deren Radius (r) oder Durchmesser (d) wesentlich größer ist als die Breite des aufgerollten Klebebandes. Die Breite des Klebebandes entspricht der Höhe (h) eines geraden, kreisförmigen Zylinders mit zwei planplanaren äußeren kreisförmigen Flächen. Für die Tellerrolle in Forme eines geraden, kreisförmigen Zylinders gilt h << d, insbesondere h << r. Eine solche Tellerrolle weist vorzugsweise mindestens eine Lauflänge von 10 m bis 1000 m auf, bevorzugt 20 bis 100 m. Der Durchmesser der Tellerrolle beträgt vorzugsweise 200 bis 500 mm, insbesondere 250 bis 400 mm, beispielsweise 280 bis 350 mm.

Unter einem "Klebeband" wird ein flächiges Gebilde verstanden, das entweder ein zumindest einseitig mit Haftklebstoff beschichtetes Trägermaterial umfasst oder aus einer oder mehreren direkt aufeinander aufgebrachten Haftklebstoffschichten besteht (Transferklebeband) und das zumindest an einer seiner beiden Hauptflächen haftklebrige Eigenschaften aufweist. Der allgemeine Ausdruck "Klebeband" umfasst im Sinne dieser Erfindung alle flächigen Gebilde wie in zwei Dimensionen ausgedehnte Folien oder Folienabschnitte, Bänder mit ausgedehnter Länge und begrenzter Breite, Bandabschnitte, Etiketten, Stanzlinge und dergleichen. Unter "haftklebrig" wird verstanden, dass das betreffende Klebeband bereits nach Anwendung von leichtem Druck auf den meisten Oberflächen haftet, ohne dass eine Aktivierung, beispielsweise durch Anfeuchten oder Erwärmen, nötig wäre.

Der Begriff "Trägermaterial" umfasst hier jede(s) denkbare Schicht oder Gebilde aus mehreren Schichten, die/das in dem Klebeband noch mit zumindest einer haftklebrigen Schicht beschichtet ist.

Bei dem Klebeband kann es sich also sowohl um ein einschichtiges als auch um ein mehrschichtiges Klebeband handeln. Die Klebebänder können beispielsweise gestaltet sein als
- einschichtige, beidseitig selbstklebende Klebebänder - sogenannte "Transfertapes" - aus einer einzigen Schicht einer geschäumten Selbstklebemasse;
- einseitig selbstklebend ausgerüstete Klebebänder - nachfolgend auch "einseitige Klebebänder" genannt - bei denen die Selbstklebemassenschicht eine geschäumte Schicht ist, zum Beispiel Zweischichtsysteme aus einer geschäumten Selbstklebemasse und einer hitzeaktivierbaren Klebemasse oder einer geschäumten oder nicht geschäumten Trägerschicht;
- beidseitig selbstklebend ausgerüstete Klebebänder - nachfolgend auch "doppelseitige Klebebänder" genannt - bei denen eine, insbesondere beide Selbstklebemassenschichten eine geschäumte Polymermasse ist beziehungsweise sind und/oder bei denen die Trägerschicht eine geschäumte Polymerschicht ist.

Die Klebebänder können einen symmetrischen oder einen asymmetrischen Produktaufbau aufweisen. In einer bevorzugten Ausführungsform der Erfindung besteht das Klebeband aus einem viskoelastischen, geschäumten Träger, der somit selbst haftklebrige Eigenschaften aufweist. In einerweiteren Ausführungsform ist dieser Träger einseitig direkt mit einer Haftklebemasse beschichtet. Alternative Ausführungsformen sehen vor, dass der Träger beidseitig direkt mit Haftklebemasse beschichtet ist, wobei die beiden Haftklebemassen gleich oder voneinander verschieden sein können. In einer weiteren Ausführungsform ist zwischen dem viskoelastischen Träger und der Haftklebemasse beziehungsweise den Haftklebemassen mindestens eine, bevorzugt genau eine, zusätzliche Schicht enthalten. Bei dieser zusätzlichen Schicht kann es sich beispielsweise um eine Primerschicht handeln.

Der Begriff "viskoelastisch" wird dabei gemäß der Definition von Chang in "Handbook of Pressure-Sensitive Adhesives and Products - Fundamentals of pressure sensitivity, Edited by I. Benedek und M. M. Feldstein, 2009, CRC Press, Taylor & Francis Group", dort Kapitel 5, insbesondere Figure 5.7, "Transition-flow region, General purpose PSA", und Figure 5.13, "Dahlquist contact criteria", verstanden.

Bevorzugt beträgt die Höhe bzw. Dicke des Klebebandes bis zu 8000 µm, stärker bevorzugt bis zu 7000 µm, insbesondere bis zu 6000 µm, beispielsweise 150 µm bis 5500 µm und ganz besonders bevorzugt 170 µm bis 5200 µm. Insbesondere bevorzugt beträgt die Gesamthöhe bzw. Gesamtdicke des Klebebandes 200 bis 5500 µm. Besonders bevorzugt beträgt die Höhe eines einschichtigen Klebebandes 150 µm bis 1300 µm, insbesondere 200 µm bis 1200 µm, und die Höhe eines mehrschichtigen, insbesondere dreischichtigen, Klebebandes 150 µm bis 8000 µm, insbesondere 200 µm bis 5500 µm. Ein auf dem Klebeband möglicherweise ein- oder beidseitig aufliegender Releaseliner gehört erfindungsgemäß nicht zu dem Klebeband und findet somit auch keine Berücksichtigung bei der Ermittlung der Höhe des Klebebandes.

Unter der "Höhe" bzw. der "Dicke" des Klebebandes wird erfindungsgemäß die Ausdehnung des betreffenden Klebebandes entlang der z-Ordinate eines gedachten Koordinatensystems verstanden, bei dem die durch die Maschinenrichtung und die Querrichtung zur Maschinenrichtung aufgespannte Ebene die x-y-Ebene bildet. Die Höhe bzw. Dicke des Klebebandes wird gemäß ISO 1923 bestimmt.

Das Klebeband umfasst bevorzugt mindestens ein thermisch vernetztes Polymer. Überraschend haben sich Klebebänder auf Basis thermisch vernetzter Polymere als thermisch stabiler gegenüber Klebebändern auf Basis UV-vernetzter Polymere herausgestellt. Dies äußert sich insbesondere in einer relativ geringeren Abnahme der Zugfestigkeit nach längerer Einwirkung hoher Temperaturen, die sogar bei dreischichtigen Produkten ohne Vermittler zwischen Kern und Haftklebemasse beobachtet wurde.

Als Polymere für das geschäumte Massesystem eignen sich grundsätzlich alle dem Fachmann bekannten thermisch vernetzbaren und thermoplastisch verarbeitbaren Polymere. Bevorzugt ist mindestens ein Polymer des geschäumten Massesystems thermisch vernetzbar. Das Polymer, das zu einem Anteil von mindestens 30 Gew.-% in dem geschäumten Massesystem in Bezug auf die Gesamtmasse des Massesystems vorliegt kann auch als "Basispolymer" bezeichnet werden. Besonders bevorzugt ist mindestens ein Polymer bzw. Basispolymer der geschäumten Schicht ausgewählt aus der Gruppe bestehend aus Poly(meth)acrylaten, Naturkautschuk, Synthesekautschuk, Vinylaromatenblockcopolymeren, insbesondere Styrolblockcopolymeren, Ethylenvinylacetaten (EVA), Silikonkautschuk, Polyvinylethern, Polyurethanen sowie Mischungen von zwei oder mehreren der genannten Polymere. Ganz besonders bevorzugt sind alle Basispolymere der geschäumten Schicht ausgewählt aus der Gruppe bestehend aus Poly(meth)acrylaten, Naturkautschuken, Synthesekautschuken, Vinylaromatenblockcopolymeren, insbesondere Styrolblockcopolymeren, Ethylenvinylacetaten (EVA), Silikonkautschuken, Polyvinylethern, Polyurethanen sowie Mischungen von zwei oder mehreren der genannten Polymere.

Besonders bevorzugt ist mindestens ein Polymer des geschäumten Massesystems ein Poly(meth)acrylat. Insbesondere basieren alle Polymere des geschäumten Massesystems bzw. der geschäumten Schicht auf Poly(meth)acrylaten. Unter "Poly(meth)acrylaten" werden Polymere verstanden, deren Monomerbasis zu mindestens 60 Gew.-% aus Acrylsäure, Methacrylsäure, Acrylsäureestern und/oder Methacrylsäureestern besteht, wobei Acrylsäureester und/oder Methacrylsäureester zumindest anteilig, bevorzugt zu mindestens 50 Gew.-%, bezogen auf die gesamte Monomerbasis des betreffenden Polymers, enthalten sind. Insbesondere wird unter einem "Poly(meth)acrylat" ein Polymerisat verstanden, welches durch radikalische Polymerisation von Acryl- und/oder Methacrylmonomeren sowie gegebenenfalls weiteren, copolymerisierbaren Monomeren erhältlich ist.

Vorzugsweise sind die Poly(meth)acrylate erhältlich durch zumindest anteiliges Einpolymerisieren von funktionellen, mit Epoxidgruppen vernetzungsfähigen Monomeren. Besonders bevorzugt handelt es sich dabei um Monomere mit Säuregruppen (besonders Carbonsäure-, Sulfonsäure oder Phosphonsäuregruppen) und/oder Hydroxygruppen und/oder Säureanhydridgruppen und/oder Epoxidgruppen und/oder Amingruppen; insbesondere bevorzugt sind carbonsäuregruppenhaltige Monomere. Es ist ganz besonders vorteilhaft, wenn das Polyacrylat einpolymerisierte Acrylsäure und/oder Methacrylsäure aufweist. All diese Gruppen weisen eine Vernetzungsfähigkeit mit Epoxidgruppen auf, wodurch das Polyacrylat vorteilhaft einer thermischen Vernetzung mit eingebrachten Epoxiden zugänglich wird.

Weitere Monomere, die als Comonomere für die Poly(meth)acrylate verwendet werden können, sind neben Acrylsäure- und/oder Methacrylsäureestern mit bis zu 30 C-Atomen beispielsweise Vinylester von bis zu 20 C-Atome enthaltenden Carbonsäuren, Vinylaromaten mit bis zu 20 C-Atomen, ethylenisch ungesättigte Nitrile, Vinylhalogenide, Vinylether von 1 bis 10 C-Atome enthaltenden Alkoholen, aliphatische Kohlenwasserstoffe mit 2 bis 8 C-Atomen und 1 oder 2 Doppelbindungen oder Mischungen dieser Monomeren.

Die Eigenschaften des betreffenden Poly(meth)acrylats (Haftklebemasse, Heißsiegelmasse, viskoelastisches nichtklebriges Material und dergleichen) lassen sich insbesondere über eine Variation der Glasübergangstemperatur des Polymers durch unterschiedliche Gewichtsanteile der einzelnen Monomere beeinflussen.

Das Polymer bzw. die Polymere ausgewählt aus Poly(meth)acrylaten können vorzugsweise auf die folgende Monomerzusammensetzung zurückgeführt werden:
a) Acrylsäureester und/oder Methacrylsäureester der folgenden Formel CH₂ = C(R^{I})(COOR^{II}), wobei R^{I} = H oder CH₃ und R^{II} ein Alkylrest mit 4 bis 14 C-Atomen ist
b) olefinisch ungesättigte Monomere mit funktionellen Gruppen der für eine Reaktivität mit Epoxidgruppen bereits definierten Art,
c) optional weitere Acrylate und/oder Methacrylate und/oder olefinisch ungesättigte Monomere, die mit der Komponente (a) copolymerisierbar sind.

Zur Anwendung des Polyacrylats als Haftkleber sind die Anteile der entsprechenden Komponenten (a), (b), und (c) bevorzugt derart gewählt, dass das Polymerisationsprodukt eine Glastemperatur ≤ 15 C (DMA bei geringen Frequenzen) aufweist.

Zur Herstellung von Haftklebemassen ist es sehr vorteilhaft, die Monomere der Komponente (a) mit einem Anteil von 45 bis 99 Gew.-%, die Monomere der Komponente (b) mit einem Anteil von 1 bis 15 Gew.-% und die Monomere der Komponente (c) mit einem Anteil von 0 bis 40 Gew.-% zu wählen (die Angaben sind bezogen auf die Monomermischung für das "Basispolymer", also ohne Zusätze eventueller Additive zu dem fertigen Polymer, wie Harze etc).

Soll das Polyacrylat als Heißschmelzkleber, also als ein Material, welches erst durch Erwärmen haftklebrig wird, verwendet werden, werden die Anteile der Komponenten (a), (b), und (c) bevorzugt derart gewählt, dass das Copolymer eine Glasübergangstemperatur (T_{G}) zwischen 15 °C und 100 °C aufweist, bevorzugt zwischen 30 °C und 80 °C, besonders bevorzugt zwischen 40 °C und 60 °C.

Ein viskoelastisches Material, das typischerweise beidseitig mit haftklebrigen Schichten kaschiert sein kann, hat insbesondere eine Glasübergangstemperatur (T_{G}) zwischen - 50°C bis +100°C, bevorzugt zwischen -20 °C bis + 60°C, besonders bevorzugt 0°C bis 40°C. Die Anteile der Komponenten (a), (b), und (c) sind auch hier entsprechend zu wählen.

Die Monomere der Komponente (a) sind insbesondere weichmachende und/oder unpolare Monomere. Vorzugsweise werden als Monomere (a) Acryl- und Methacrylsäureester mit Alkylgruppen bestehend aus 4 bis 14 C-Atomen, besonders bevorzugt 4 bis 9 C-Atomen, eingesetzt. Beispiele für derartige Monomere sind n-Butylacrylat, n-Butylmethacrylat, n-Pentylacrylat, n-Pentylmethacrylat, n-Amylacrylat, n-Hexylacrylat, n-Hexylmethacrylat, n-Heptylacrylat, n-Octylacrylat, n-Octylmethacrylat, n-Nonylacrylat, Isobutylacrylat, Isooctylacrylat, Isooctylmethacrylat, und deren verzweigte Isomere, wie zum Beispiel 2-Ethylhexylacrylat oder 2-Ethylhexylmethacrylat.

Die Monomere der Komponente (b) sind insbesondere olefinisch ungesättigte Monomere mit funktionellen Gruppen, insbesondere mit funktionellen Gruppen, die eine Reaktion mit Epoxidgruppen eingehen können.

Bevorzugt werden für die Komponente (b) Monomere mit funktionellen Gruppen eingesetzt, die ausgewählt sind aus der Gruppe umfassend: Hydroxy-, Carboxy-, Sulfonsäure- oder Phosphonsäuregruppen, Säureanhydride, Epoxide, Amine. Besonders bevorzugte Beispiele für Monomere der Komponente (b) sind Acrylsäure, Methacrylsäure, Itaconsäure, Maleinsäure, Fumarsäure, Crotonsäure, Aconitsäure, Dimethylacrylsäure, β-Acryloyloxypropionsäure, Trichloracrylsäure, Vinylessigsäure, Vinylphosphonsäure, Itasconsäure, Maleinsäureanhydrid, Hydroxyethylacrylat, Hydroxypropylacrylat, Hydroxyethylmethacrylat, Hydroxypropylmethacrylat, 6-Hydroxyhexylmethacrylat, Allylalkohol, Glycidylacrylat, Glycidylmethacrylat.

Prinzipiell können als Komponente (c) alle vinylisch funktionalisierten Verbindungen eingesetzt werden, die mit der Komponente (a) und/oder der Komponente (b) copolymerisierbar sind. Die Monomere der Komponente (c) können zur Einstellung der Eigenschaften der resultierenden Haftklebemasse dienen.

Beispielhafte Monomere der Komponente (c) sind: Methylacrylat, Ethylacrylat, Propylacrylat, Methylmethacrylat, Ethylmethacrylat, Benzylacrylat, Benzylmethacrylat, *sec*-Butylacrylat, *tert*-Butylacrylat, Phenylacrylat, Phenylmethacrylat, Isobornylacrylat, Isobornylmethacrylat, *tert*-Butylphenylacylat, *tert*-Butylaphenylmethacrylat, Dodecylmethacrylat, Isodecylacrylat, Laurylacrylat, n-Undecylacrylat, Stearylacrylat, Tridecylacrylat, Behenylacrylat, Cyclohexylmethacrylat, Cyclopentylmethacrylat, Phenoxyethylacrlylat, Phenoxyethylmethacrylat, 2-Butoxyethylmethacrylat, 2-Butoxyethylacrylat, 3,3,5-Trimethylcyclohexylacrylat, 3,5-Dimethyladamantylacrylat, 4-Cumylphenylmethacrylat, Cyanoethylacrylat, Cyanoethylmethacrylat, 4-Biphenylacrylat, 4-Biphenylmethacrylat, 2-Naphthylacrylat, 2-Naphthylmethacrylat, Tetrahydrofufurylacrylat, Diethylaminoethylacrylat, Diethylaminoethylmethacrylat, Dimethylaminoethyl-acrylat, Dimethylaminoethylmethacrylat, 2-Butoxyethylacrylat, 2-Butoxyethylmethacrylat, 3-Methoxyacrylsäuremethylester, 3-Methoxybutylacrylat, Phenoxyethylacrlylat, Phenoxyethylmethacrylat, 2-Phenoxyethylmethacrylat, Butyldiglykolmethacrylat, Ethylenglycolacrylat, Ethylenglycolmonomethylacrylat, Methoxy Polyethylenglykolmethacrylat 350, Methoxy Polyethylenglykolmethacrylat 500, Propylenglycolmonomethacrylat, Butoxydiethylenglykolmethacrylat, Ethoxytriethylenglykolmethacrylat, Octafluoropentylacrylat, Octafluoropentylmethacrylat, 2,2,2-Trifluoroethylmethacrylat, 1,1,1,3,3,3-Hexafluoroisopropylacrylat, 1,1,1,3,3,3-Hexafluoroisopropylmethacrylat, 2,2,3,3,3-Pentafluoropropylmethacrylat, 2,2,3,4,4,4-Hexafluorobutylmethacrylat, 2,2,3,3,4,4,4-Heptafluorobutylacrylat, 2,2,3,3,4,4,4-Heptafluorobutylmethacrylat, 2,2,3,3,4,4,5,5,6,6,7,7,8,8,8-Pentadecafluorooctylmethacrylat, Dimethylaminopropylacrylamid, Dimethylaminopropylmethacrylamid, *N*-(1-Methyl-undecyl)acrylamid, *N*-(n-Butoxymethyl)acrylamid, *N-*(Butoxymethyl)methacrylamid, *N*-(Ethoxymethyl)acrylamid, *N*-(n-Octadecyl)acrylamid, weiterhin *N*,*N*-Dialkyl-substituierte Amide, wie beispielsweise *N*,*N*-Dimethylacrylamid, *N*,*N*-Dimethylmethacrylamid, *N*-Benzylacrylamide, *N*-Isopropylacrylamid, *N-tert-*Butylacrylamid, *N*-*tert*-Octylacrylamid, *N*-Methylolacrylamid, *N*-Methylolmethacrylamid, Acrylnitril, Methacrylnitril, Vinylether, wie Vinylmethylether, Ethylvinylether, Vinylisobutylether, Vinylester, wie Vinylacetat, Vinylchlorid, Vinylhalogenide, Vinylidenchlorid, Vinylidenhalogenide, Vinylpyridin, 4-Vinylpyridin, *N*-Vinylphthalimid, *N-*Vinyllactam, *N*-Vinylpyrrolidon, Styrol, a- und p-Methylstyrol, a-Butylstyrol, 4-n-Butylstyrol, 4-n-Decylstyrol, 3,4-Dimethoxystyrol. Makromonomere wie 2-Polystyrolethylmethacrylat (Molekulargewicht Mw von 4000 bis 13000 g/mol), Poly(methylmethacrylat)ethylmethacrylat (Mw von 2000 bis 8000 g/mol).

Monomere der Komponente (c) können vorteilhaft auch derart gewählt werden, dass sie funktionelle Gruppen enthalten, die eine nachfolgende strahlenchemische Vernetzung (beispielsweise durch Elektronenstrahlen, UV) unterstützen. Geeignete copolymerisierbare Photoinitiatoren sind zum Beispiel Benzoinacrylat und acrylatfunktionalisierte Benzophenonderivate. Monomere, die eine Vernetzung durch Elektronenbestrahlung unterstützen, sind zum Beispiel Tetrahydrofufurylacrylat, *N-tert-*Butylacrylamid und Allylacrylat.

Die Herstellung der Polyacrylate ("Polyacrylate" wird als Synonym mit "Poly(meth)acrylate" verstanden) kann nach dem Fachmann geläufigen Verfahren geschehen, insbesondere vorteilhaft durch konventionelle radikalische Polymerisationen oder kontrollierte radikalische Polymerisationen. Die Polyacrylate können durch Copolymerisation der monomeren Komponenten unter Verwendung der üblichen Polymerisationsinitiatoren sowie gegebenenfalls von Reglern hergestellt werden, wobei bei den üblichen Temperaturen in Substanz, in Emulsion, zum Beispiel in Wasser oder flüssigen Kohlenwasserstoffen, oder in Lösung polymerisiert wird.

Die gewichtsmittleren Molekulargewichte M_{W} der Polyacrylate liegen bevorzugt in einem Bereich von 20.000 bis 2.000.000 g/mol; sehr bevorzugt in einem Bereich von 100.000 bis 1.000.000 g/mol, äußerst bevorzugt in einem Bereich von 150.000 bis 500.000 g/mol [die Angaben des mittleren Molekulargewichtes Mw und der Polydispersität PD in dieser Schrift beziehen sich auf die Bestimmung per Gelpermeationschromatographie. Dazu kann es vorteilhaft sein, die Polymerisation in Gegenwart geeigneter Polymerisationsregler wie Thiole, Halogenverbindungen und/oder Alkohole durchzuführen, um das gewünschte mittlere Molekulargewicht einzustellen.

Das Polyacrylat hat vorzugsweise einen K-Wert von 30 bis 90, besonders bevorzugt von 40 bis 70, gemessen in Toluol (1%ige Lösung, 21 C). Der K-Wert nach Fikentscher ist ein Maß für das Molekulargewicht und die Viskosität des Polymerisats.

Besonders geeignet sind Polyacrylate, die eine enge Molekulargewichtsverteilung (Polydispersität PD < 4) haben. Diese Massen haben trotz eines relativ niedrigen Molekulargewichts nach dem Vernetzen eine besonders gute Scherfestigkeit. Zudem ermöglicht die niedrigere Polydispersität eine leichtere Verarbeitung aus der Schmelze, da die Fließviskosität gegenüber einem breiter verteilten Polyacrylat bei weitgehend gleichen Anwendungseigenschaften geringer ist.

Die Monomere zur Herstellung der Poly(meth)acrylate enthalten bevorzugt anteilig funktionelle Gruppen, die geeignet sind, mit Epoxidgruppen Verknüpfungsreaktionen einzugehen. Dies ermöglicht vorteilhaft eine thermische Vernetzung der Polyacrylate durch Reaktion mit Epoxiden. Unter Verknüpfungsreaktionen werden insbesondere Additions- und Substitutionsreaktionen verstanden. Bevorzugt kommt es also zu einer Verknüpfung der die funktionellen Gruppen tragenden Bausteine mit Epoxidgruppen tragenden Bausteinen, insbesondere im Sinne einer Vernetzung der die funktionellen Gruppen tragenden Polymerbausteine über Epoxidgruppen tragende Vernetzermoleküle als Verknüpfungsbrücken. Bei den epoxidgruppenhaltigen Substanzen handelt es sich bevorzugt um multifunktionelle Epoxide, also solche mit mindestens zwei Epoxidgruppen; entsprechend kommt es bevorzugt insgesamt zu einer mittelbaren Verknüpfung der die funktionellen Gruppen tragenden Bausteine.

Die bevorzugten Poly(meth)acrylate lassen sich insbesondere dann vorteilhaft einsetzen, wenn ein hoher Masseauftrag in einer Schicht gefordert ist, da mit entsprechenden Beschichtungsverfahren ein nahezu beliebig hoher Masseauftrag, bevorzugt von mehr als 150 g/m², besonders bevorzugt von mehr als 200 g/m², vorteilhaft größer gleich 150 bis kleiner gleich 3000 g/m², möglich sind, und zwar insbesondere bei gleichzeitig homogener Vernetzung durch die Schicht hindurch.

Die bevorzugten Poly(meth)acrylate können auch die Basis für die Haftklebemasse eines trägerlosen Klebebandes, eines sogenannten Transferklebebandes, bilden. Auch hier ist der nahezu beliebig hoch einstellbare Masseauftrag bei gleichzeitig homogener Vernetzung durch die Schicht hindurch besonders vorteilhaft. Bevorzugte Flächengewichte sind mehr als 150 g/m² bis 5000 g/m², besonders bevorzugt 200 g/m² bis 3000 g/m².

Es ist auch möglich, dass das Klebeband ein oder mehrere Polyacrylat(e), insbesondere ein oder mehrere thermisch vernetzbare(s) Polyacrylat(e), das/die mit einem oder mehreren anderen Polymeren abgemischt (geblendet) ist/sind, als Hauptbestandteil einer Schicht, insbesondere einer geschäumten Schicht, enthält. Hierzu eignen sich die bereits als neben Polyacrylaten bevorzugte Basispolymere der geschäumten Schicht aufgeführten Optionen Naturkautschuke, Synthesekautschuke, Vinylaromatenblockcopolymere, insbesondere Styrolblockcopolymere, EVA, Silikonkautschuke, Polyvinylether und Polyurethane. Es hat sich als zweckmäßig erwiesen, diese Polymere in granulierter oder andersartig zerkleinerter Form dem Polyacrylat, bevorzugt vor der eventuellen Zugabe eines thermischen Vernetzers, zuzusetzen. Die Herstellung der Polymerblends erfolgt bevorzugt in einem Extruder, insbesondere in einem Mehrwellenextruder oder in einem Planetwalzenmischer. Zur Stabilisierung von thermisch vernetzten Acrylathotmelts, insbesondere auch von Polymerblends aus thermisch vernetzten Acrylathotmelts und anderen Polymeren, kann es sinnvoll sein, das ausgeformte Material mit Elektronenbestrahlung geringer Dosen zu bestrahlen. Optional können zu diesem Zweck dem Polyacrylat Vernetzungspromotoren wie di-, tri-, oder multifunktionelle Acrylate, Polyester und/oder Urethanacrylate zugesetzt werden.

Es können alternativ andere beziehungsweise anders vorbehandelte Klebeschichten, also beispielsweise Haftklebeschichten und/oder hitzeaktivierbare Schichten auf Basis anderer Polymere als Poly(meth)acrylate zu der geschäumten Schicht des Klebebandes kaschiert werden. Geeignete Polymere sind Naturkautschuke, Synthesekautschuke, Acrylatblockcopolymere, Vinylaromatenblockcopolymere, insbesondere Styrolblockcopolymere, EVA, Polyolefine, Polyurethane, Polyvinylether und Silikone. Bevorzugt enthalten diese Schichten keine nennenswerten Anteile an migrationsfähigen Bestandteilen, die mit dem Material der geschäumten Schicht so gut verträglich sind, dass sie in signifikanter Menge in die geschäumte Schicht diffundieren und dort die Eigenschaften verändern.

Statt beidseitig eine Klebeschicht auf die geschäumte Schicht zur Herstellung der geschäumten Haftklebeschicht zu kaschieren, kann auch mindestens einseitig eine Schmelzklebeschicht oder eine thermisch aktivierbare Klebeschicht kaschiert werden. Die auf diese Weise erhaltenen asymmetrischen Klebebänder erlauben das Verkleben kritischer Substrate mit hoher Verklebungsfestigkeit. Ein derartiges Klebeband kann beispielsweise zur Befestigung von EPDM-Gummiprofilen an Fahrzeugen verwendet werden.

Sowohl geschäumte Schichten als auch - sofern nicht ohnehin damit identisch - Haftklebeschichten des Klebebandes können mindestens ein klebrig machendes Harz enthalten. Sieht der Produktaufbau des Klebebandes sowohl eine geschäumte Schicht als auch äußere Haftklebemassenschichten vor und enthalten diese die gleichen Basispolymere, so ist es von Vorteil, in allen diesen Schichten die gleichen Harze in gleicher Konzentration zu verwenden, um Veränderungen der Produkteigenschaften durch Harzmigration zwischen den Schichten zu vermeiden. Enthalten diese Schichten nicht das beziehungsweise die gleiche(n) Basispolymer(e), ist es von Vorteil, die Harze so auszuwählen, dass sie mit der jeweils anderen Schicht insofern unverträglich sind, als sie nicht in diese migrieren und somit keine Eigenschaftsveränderungen hervorrufen.

Als klebrig machende Harze sind insbesondere aliphatische, aromatische und/oder alkylaromatische Kohlenwasserstoffharze, Kohlenwasserstoffharze auf Basis reiner Monomere, hydrierte Kohlenwasserstoffharze, funktionelle Kohlenwasserstoffharze sowie Naturharze einsetzbar. Bevorzugt ist das klebrig machende Harz ausgewählt aus der Gruppe umfassend Pinen-, Inden- und Kolophoniumharze, deren disproportionierte, hydrierte, polymerisierte und/oder veresterte Derivate und Salze, Terpenharze und Terpenphenolharze sowie C5-, C9- und andere Kohlenwasserstoffharze. Auch Kombinationen dieser und weiterer Harze können vorteilhaft eingesetzt werden, um die Eigenschaften der resultierenden Klebmasse wunschgemäß einzustellen. Besonders bevorzugt ist das klebrig machende Harz ausgewählt aus der Gruppe umfassend Terpenphenolharze und Kolophoniumester.

In einer speziellen Ausführungsform enthält das Klebeband eine Haftklebeschicht umfassend ein geschäumtes Massesystem, das mindestens ein Poly(meth)acrylat als Hauptbestandteil enthält, und mindestens eine äußere Klebeschicht, die mindestens ein Vinylaromatenblockcopolymer als Hauptbestandteil enthält. In diesem Fall können in der äußeren Klebeschicht neben den zuvor erwähnten Harzen weitere Klebharze zur Erhöhung der Adhäsion eingesetzt werden. Das/die Klebharz(e) sollte(n) mit dem Elastomerblock (Weichblock) der Blockcopolymere verträglich sein. Bevorzugte Klebharze dieser Ausführungsform der Erfindung sind ausgewählt aus der Gruppe umfassend nicht hydrierte, partiell hydrierte und vollständig hydrierte Harze auf Basis von Kolophonium oder Kolophoniumderivaten, hydrierte Polymerisate des Dicyclopentadiens, nicht hydrierte, partiell, selektiv und vollständig hydrierte Kohlenwasserstoffharze auf Basis von C5-, C5/C9- oder C9-Monomerströmen, Polyterpenharze auf Basis von α-Pinen und/oder ß-Pinen und/oder δ-Limonen sowie Gemische der hier aufgeführten Harze, wobei die Klebharze nicht verträglich mit dem Acrylatpolymer der geschäumten Schicht sind. Besonders bevorzugt sind Polyterpenharze auf Basis von α-Pinen und/oder ß-Pinen und/oder δ-Limonen sowie Gemische davon. Die Klebemasseformulierung kann auch Klebharze enthalten, die bei Raumtemperatur flüssig sind.

Die im Klebeband eingesetzten Polymere, insbesondere die Poly(meth)acrylate, sind bevorzugt durch Verknüpfungsreaktionen - insbesondere im Sinne von Additions- oder Substitutionsreaktionen - von in ihnen enthaltenen funktionellen Gruppen mit thermischen Vernetzern vernetzt. Es können alle thermischen Vernetzer verwendet werden, die sowohl eine ausreichend lange Verarbeitungszeit gewährleisten, sodass es nicht zu einer Vergelung während des Verarbeitungsprozesses, insbesondere des Extrusionsprozesses, kommt, als auch zu einer schnellen Nachvernetzung des Polymers auf den gewünschten Vernetzungsgrad bei niedrigeren Temperaturen als der Verarbeitungstemperatur, insbesondere bei Raumtemperatur, führen. Möglich ist beispielsweise eine Kombination aus Carboxyl-, Amin- und/oder Hydroxygruppen enthaltenden Polymeren und Isocyanten als Vernetzer, insbesondere den in der EP 1 791 922 A1 beschriebenen aliphatischen oder mit Aminen deaktivierten trimerisierten Isocyanaten.

Geeignete Isocyanate sind insbesondere trimerisierte Derivate von MDI [4,4-Methylen-di(phenylisocyanat)], HDI [Hexamethylendiisocyanat, 1,6-Hexylendiisocyanat] und/oder IPDI [Isophorondiisocyanat, 5-lsocyanato-1-isocyanatomethyl-1,3,3-trimethylcyclohexan], beispielsweise die Typen Desmodur® N3600 und XP2410 (jeweils BAYER AG: Aliphatische Polyisocyanate, niedrigviskose HDI-Trimerisate). Ebenfalls geeignet ist die oberflächendeaktivierte Dispersion von mikronisiertem trimerisiertem IPDI BUEJ 339®, jetzt HF9 ® (BAYER AG).

Grundsätzlich zur Vernetzung geeignet sind aber auch andere Isocyanate wie Desmodur VL 50 (Polyisocyanate am MDI-Basis, Bayer AG), Basonat F200WD (aliphatisches Polyisocyanat, BASF AG), Basonat HW100 (wasseremulgierbares polyfunktionelles Isocyanat auf HDI-Basis, BASF AG), Basonat HA 300 (allophanatmodifiziertes Polyisocyanat auf Isocyanurat. HDI-Basis, BASF) oder Bayhydur VPLS2150/1 (hydrophil modifiziertes IPDI, Bayer AG). Bevorzugt wird der thermische Vernetzer, beispielsweise das trimerisierte Isocyanat, zu 0,1 bis 5 Gew.-%, insbesondere zu 0,2 bis 1 Gew.-%, bezogen auf die Gesamtmenge des zu vernetzenden Polymers, eingesetzt.

Bevorzugt umfasst das Klebeband mindestens ein mittels Epoxid vernetztes Polymer, besonders bevorzugt mindestens ein mittels mindestens einer epoxidgruppenhaltigen Substanz vernetztes Poly(meth)acrylat. Insbesondere sind alle Basispolymere der im Klebeband enthaltenen geschäumten Schichten und/oder Haftklebeschichten mittels mindestens einer epoxidgruppenhaltigen Substanz vernetzte Polymere. Ganz besonders bevorzugt sind alle Basispolymere der im Klebeband enthaltenen geschäumten Schichten und/oder Haftklebeschichten mittels mindestens einer epoxidgruppenhaltigen Substanz vernetzte Poly(meth)acrylate.

Bei den epoxidgruppenhaltigen Substanzen handelt es sich insbesondere um multifunktionelle Epoxide, also solche mit zumindest zwei Epoxidgruppen; entsprechend kommt es insgesamt zu einer mittelbaren Verknüpfung der die funktionellen Gruppen tragenden Bausteine. Die epoxidgruppenhaltigen Substanzen können sowohl aromatische als auch aliphatische Verbindungen sein.

Hervorragend geeignete multifunktionelle Epoxide sind Oligomere des Epichlorhydrins, Epoxyether mehrwertiger Alkohole (insbesondere Ethylen-, Propylen-, und Butylenglycole, Polyglycole, Thiodiglycole, Glycerin, Pentaerythrit, Sorbit, Polyvinylalkohol, Polyallylalkohol und ähnliche), Epoxyether mehrwertiger Phenole [insbesondere Resorcin, Hydrochinon, Bis-(4-hydroxyphenyl)-methan, Bis-(4-hydroxy-3-methylphenyl)-methan, Bis-(4-hydroxy-3,5-dibromphenyl)-methan, Bis-(4-hydroxy-3,5-difluorphenyl)-methan, 1,1-Bis-(4-hydroxyphenyl)ethan, 2,2-Bis-(4-hydroxyphenyl)propan, 2,2-Bis-(4-hydroxy-3-methylphenyl)-propan, 2,2-Bis-(4-hydroxy-3-chlorphenyl)-propan, 2,2-Bis-(4-hydroxy-3,5-dichlorphenyl)-propan, 2,2-Bis-(4-hydroxy-3,5-dichlorphenyl)-propan, Bis-(4-hydroxyphenyl)-phenylmethan, Bis-(4-hydroxyphenyl)-phenylmethan, Bis-(4-hydroxyphenyl)diphenylmethan, Bis (4-hydroxyphenyl)-4'-methylphenylmethan, 1,1-Bis-(4-hydroxyphenyl)-2,2,2-trichlorethan, Bis-(4-hydroxyphenyl)-(4-chlorphenyl)-methan, 1,1-Bis-(4-hydroxyphenyl)-cyclohexan, Bis-(4-hydroxyphenyl)-cyclohexylmethan, 4,4'-Dihydroxydiphenyl, 2,2'-Dihydroxydiphenyl, 4,4'-Dihydroxydiphenylsulfon] sowie deren Hydroxyethylether, Phenol-Formaldehyd-Kondensationsprodukte, wie Phenolalkohole, Phenolaldehydharze und ähnliche, S- und N-haltige Epoxide (zum Beispiel N,N-Diglycidylanillin, N,N'-Dimethyldiglycidyl-4,4-Diaminodiphenylmethan) sowie Epoxide, welche nach üblichen Verfahren aus mehrfach ungesättigten Carbonsäuren oder einfach ungesättigten Carbonsäureresten ungesättigter Alkohole hergestellt worden sind, Glycidylester, Polyglycidylester, die durch Polymerisation oder Mischpolymerisation von Glycidylestern ungesättigter Säuren gewonnen werden können oder aus anderen sauren Verbindungen (Cyanursäure, Diglycidylsulfid, cyclischem Trimethylentrisulfon bzw. deren Derivaten und anderen) erhältlich sind.

Sehr geeignete Ether sind beispielsweise 1,4-Butandioldiglycidether, Polyglycerol-3-Glycidether, Cyclohexandimethanoldiglycidether, Glycerintriglycidether, Neopentylglykoldiglycidether, Pentaerythrittetraglycidether, 1,6-Hexandioldiglycidether), Polypropylenglykoldiglycidether, Trimethylolpropantriglycidether, Pentaerythrittetraglycidether, Bisphenol-A-diglycidether und Bisphenol-F-diglycidether.

Besonders bevorzugt, insbesondere für Poly(meth)acrylate als zu vernetzende Polymere, ist die Verwendung eines Vernetzer-Beschleuniger-Systems ("Vernetzungssystem"), um eine bessere Kontrolle sowohl über die Verarbeitungszeit, Vernetzungskinetik sowie den Vernetzungsgrad zu erhalten. Das Vernetzer-Beschleuniger-System umfasst zumindest eine epoxidgruppenhaltige Substanz als Vernetzer und zumindest eine bei einer Temperatur unterhalb der Schmelztemperatur des zu vernetzenden Polymers für Vernetzungsreaktionen mittels epoxidgruppenhaltigen Verbindungen beschleunigend wirkende Substanz als Beschleuniger.

Als Beschleuniger werden besonders bevorzugt Amine (formell als Substitutionsprodukte des Ammoniaks aufzufassen; in den folgenden Formeln sind diese Substituenten durch "R" dargestellt und umfassen insbesondere Alkyl- und/oder Arylreste und/oder andere organische Reste) eingesetzt, insbesondere bevorzugt solche Amine, die mit den Bausteinen der zu vernetzenden Polymere keine oder nur geringfüge Reaktionen eingehen.

Prinzipiell können als Beschleuniger sowohl primäre (NRH₂), sekundäre (NR₂H) als auch tertiäre Amine (NR₃) gewählt werden, selbstverständlich auch solche, die mehrere primäre und/oder sekundäre und/oder tertiäre Amingruppen aufweisen. Besonders bevorzugte Beschleuniger sind aber tertiäre Amine wie beispielweise Triethylamin, Triethylendiamin, Benzyldimethylamin, Dimethylamino-methylphenol, 2,4,6-Tris-(N,N-dimethylaminomethyl)-phenol, N,N'-Bis(3-(dimethyl-amino)propyl)harnstoff. Als Beschleuniger können vorteilhaft auch multifunktionelle Amine wie Diamine, Triamine und/oder Tetramine eingesetzt werden. Hervorragend geeignet sind zum Beispiel Diethylentriamin, Triethylentetramin, Trimethylhexamethylendiamin.

Als Beschleuniger werden darüber hinaus bevorzugt Aminoalkohole verwendet. Besonders bevorzugt werden sekundäre und/oder tertiäre Aminoalkohole eingesetzt, wobei im Falle mehrerer Aminfunktionalitäten pro Molekül bevorzugt mindestens eine, bevorzugt alle Aminfunktionalitäten sekundär und/oder tertiär sind. Als bevorzugte Aminoalkohol-Beschleuniger können Triethanolamin, N,N-Bis(2-hydroxypropyl)ethanolamin, N-Methyldiethanolamin, N-Ethyldiethanolamin, 2-Aminocyclohexanol, Bis(2-hydroxycyclohexyl)methylamin, 2-(Diisopropylamino)ethanol, 2-(Dibutylamino)ethanol, N-Butyldiethanolamin, N-Butylethanolamin, 2-[Bis(2-hydroxyethyl)amino]-2-(hydroxymethyl)-1,3-propandiol, 1-[Bis(2-hydroxyethyl)amino]-2-propanol, Triisopropanolamin, 2-(Dimethylamino)ethanol, 2-(Diethylamino)ethanol, 2-(2-Dimethylaminoethoxy)ethanol, N,N,N'-Trimethyl-N'-hydroxyethylbisaminoethylether, N,N,N'-Trimethylaminoethylethanolamin und/ oder N,N,N'-Trimethylaminopropylethanolamin eingesetzt werden.

Weitere geeignete Beschleuniger sind Pyridin, Imidazole (wie beispielsweise 2-Methylimidazol) und 1,8-Diazabicyclo[5.4.0]undec-7-en. Auch cycloaliphatische Polyamine können als Beschleuniger eingesetzt werden. Geeignet sind auch Beschleuniger auf Phosphatbasis wie Phosphine und/oder Phosphoniumverbindungen, wie beispielsweise Triphenylphosphin oder Tetraphenylphosphoniumtetraphenylborat.

Das Klebeband kann einen oder mehrere Füllstoffe enthalten. Der oder die Füllstoff(e) kann/können in einer oder in mehreren Schichten des Klebebandes vorliegen.

So umfasst das Klebeband bevorzugt eine geschäumte Haftklebeschicht, die teil- oder vollexpandierte Mikroballons enthält. Bei Mikroballons handelt es sich um elastische Hohlkugeln, die eine thermoplastische Polymerhülle aufweisen; sie werden daher auch als expandierbare polymere Mikrosphären oder als Mikrohohlkugeln bezeichnet. Diese Kugeln sind mit niedrigsiedenden Flüssigkeiten oder verflüssigtem Gas gefüllt. Als Hüllenmaterial finden insbesondere Polyacrylnitril, Polyvinylidenchlorid (PVDC), Polyvinylchlorid (PVC), Polyamide oder Polyacrylate Verwendung. Als niedrigsiedende Flüssigkeit sind insbesondere niedere Alkane, beispielsweise Isobutan oder Isopentan geeignet, die als verflüssigtes Gas unter Druck in der Polymerhülle eingeschlossen sind. Durch ein physikalisches Einwirken auf die Mikroballons, beispielsweise durch eine Wärmeeinwirkung - insbesondere durch Wärmezufuhr oder -erzeugung, hervorgerufen zum Beispiel durch Ultraschall oder Mikrowellenstrahlung - erweicht einerseits die äußere Polymerhülle, gleichzeitig geht das in der Hülle befindliche flüssige Treibgas in seinen gasförmigen Zustand über. Bei einer bestimmten Paarung von Druck und Temperatur - im Rahmen dieser Schrift als kritische Paarung bezeichnet - dehnen sich die Mikroballons irreversibel aus und expandieren dreidimensional. Die Expansion ist beendet, wenn sich der Innen- und der Außendruck ausgleichen. Da die polymere Hülle erhalten bleibt, erzielt man so einen geschlossenzelligen Schaum.

Es ist eine Vielzahl an Mikroballontypen kommerziell erhältlich, wie zum Beispiel von der Firma Akzo Nobel die Expancel DU-Typen (dry unexpanded), welche sich im Wesentlichen über ihre Größe (6 bis 45 µm Durchmesser im unexpandierten Zustand) und ihre zur Expansion benötigten Starttemperatur (75°C bis 220°C) differenzieren. Weiterhin sind unexpandierte Mikroballontypen auch als wässrige Dispersion mit einem Feststoffbeziehungsweise Mikroballonanteil von ca. 40 bis 45 Gew.-% erhältlich, darüber hinaus auch als polymergebundende Mikroballons (Masterbatche), zum Beispiel in Ethylvinylacetat mit einer Mikroballonkonzentration von ca. 65 Gew.-%. Ferner sind sogenannte Mikroballon-Slurry-Systeme erhältlich, bei denen die Mikroballons mit einem Feststoffanteil von 60 bis 80 Gew.-% als wässrige Dispersion vorliegen. Sowohl die Mikroballon-Dispersionen, die Mikroballon-Slurrys als auch die Masterbatche sind wie die DU-Typen zur Schäumung des betreffenden Massesystems des Klebebandes geeignet.

Besonders bevorzugt enthält das geschäumte Massesystem Mikroballons, die im nicht expandierten Zustand bei 25 C einen Durchmesser von 3 µm bis 40 µm, insbesondere von 5 µm bis 20 µm, und/oder nach Expansion einen Durchmesser von 10 µm bis 200 µm, insbesondere von 15 µm bis 90 µm, aufweisen.

Durch ihre flexible, thermoplastische Polymerschale weist eine derartige geschäumte Schicht eine höhere Spaltüberbrückungsfähigkeit auf als ein Schaum, der mit nicht expandierbaren, nicht polymeren Mikrohohlkugeln wie Glas- oder Keramikhohlkugeln gefüllt ist. Insbesondere einschichtige, geschäumte Klebebänder eignen sich daher sehr gut zum Ausgleich von Fertigungstoleranzen, wie sie zum Beispiel bei Spritzgussteilen auftreten. Ferner kann ein solcher Schaum thermische Spannungen besser kompensieren.

Durch die Auswahl des thermoplastischen Harzes der Polymerschale können die mechanischen Eigenschaften des Schaums weiter beeinflusst werden. So ist es beispielsweise möglich, Schäume mit höherer Kohäsionsfestigkeit als mit der Polymermatrix allein herzustellen, obwohl der Schaum eine geringere Dichte als die Matrix aufweist. Weiterhin können typische Schaumeigenschaften wie die Anpassungsfähigkeit an raue Untergründe mit einer hohen Kohäsionsfestigkeit für PSA-Schäume kombiniert werden.

Bevorzugt enthält das geschäumte Massesystem bis zu 30 Gew.-% Mikroballons, insbesondere zwischen 0,5 Gew.-% und 10 Gew.-%, jeweils bezogen auf die Gesamtmasse der geschäumten Schicht.

Die ein geschäumtes Massesystem umfassenden Klebebänder zeigen bevorzugt eine weitgehende Abwesenheit von offenzelligen Hohlräumen, insbesondere von Lufteinschlüssen, in der/den geschäumten Schicht(en). Besonders bevorzugt weist die geschäumte Schicht einen Anteil von Hohlräumen ohne eigene Polymerhülle, also von offenzelligen Kavernen, von nicht mehr als 2 Vol-% auf, insbesondere von nicht mehr als 0,5 Vol.-%. Die geschäumte Schicht besteht somit bevorzugt aus einem geschlossenzelligen Schaum. Weiterhin besteht die geschäumte Schicht bevorzugt aus einem syntaktischen Schaum.

Gegenstand der Erfindung ist ein Verfahren zur Herstellung eines Klebebandes, indem ein breites Klebeband umfassend eine Haftklebeschicht eines geschäumten und zumindest teilweise thermisch vernetzten Massesystems, das in Bezug auf die Gesamtmasse des Massesystems zu größer gleich 30 Gew.-% mindestens ein Polymer enthält, wobei das breite Klebeband eine Höhe von mindestens 150 µm aufweist, (i) thermisch bei 30 - 60 °C nachbehandelt wird, und (ii) ein Klebeband mit einer Klebebandbreite kleiner 10 mm bei einer Temperatur des breiten Klebebandes von 30 bis 50 °C abgetrennt wird.

Erfindungsgemäß bevorzugt liegt das breite Klebeband in (i) und/oder (ii) aufgerollt als archimedische Spirale in Form einer Rolle vor, die durchgängig möglichst homogen eine Temperatur von 30 bis 50 °C aufweist.

Erfindungsgemäß wird in dem Verfahren ein Klebeband mit einer Höhe von mindestens 150 µm eingesetzt, vorteilhaft kann die Höhe des Klebebandes 200 bis 5500 µm betragen. Wie vorstehend ausgeführt umfasst die geschäumte Haftklebeschicht zumindest teilweise expandierte und/oder vollständig expandierte Mikroballons.

Die thermische Nachbehandlung erfolgt vorteilhaft über größer gleich 1 Stunde, vorzugsweise größer gleich 5 Stunden, bevorzugt größer gleich 10 Stunden, besonders bevorzugt größer gleich 15 Stunden, insbesondere bei 40 bis 50 °C. Zweck der Behandlungszeit ist es eine homogene Temperaturverteilung in dem breiten Klebeband, insbesondere der Mutterrolle einzustellen, um thermisch reversibel die Klebkraft homogen zu steigern. Besonders wirtschaftlich kann die thermische Nachbehandlung des breiten Klebebandes erfolgen, indem das breite Klebeband aufgerollt auf einer Mutterrolle thermisch nachbehandelt wird. Die Breite der Mutterrolle des breiten Klebebandes ist üblicherweise deutlich breiter als 10 mm. In der Regel beträgt die Breite einer Mutterrolle vor der ersten Abtrennung einer Tellerrolle des Klebebandes größer gleich 100 mm. Unter der Breite der Mutterrolle wird die Ausdehnung der Mutterrolle parallel zur inneren Achse der Mutterrolle verstanden.

Entsprechend einer besonders bevorzugten Verfahrensvariante liegt das breite Klebeband zur Durchführung der Schritte (i) und/oder (ii) in Form einer Mutterrolle vor, insbesondere mit einer Lauflänge von mindestens 10 bis 1000 m, vorzugsweise 20 bis 100 m, besonders bevorzugt 20 bis 80 m, wobei nach der thermischen Nachbehandlung von der Mutterrolle mindestens eine Tellerrolle, vorteilhaft eine planare Tellerrolle, mit einer Klebebandbreite von kleiner 10 mm abgetrennt wird. Erfindungsgemäß weisen die Tellerrollen zwei planplanare äußere seitliche kreisförmige Flächen auf. Die Flächen liegen in der Ebene, in der die äußere seitliche Begrenzung der Klebebandbreite liegt.

Unter einer planaren Tellerrolle wird eine Tellerrolle verstanden, die im Wesentlichen zwei kreisförmige Ebenen, insbesondere planparallele Ebenen, aufweist. Diese Tellerrolle entspricht einem sehr flachen geraden, kreisförmigen Zylinder mit zwei planparallelen äußeren kreisförmigen Ebenen oder Flächen, die in einem im Wesentlichen rechten Winkel zur Höhe des Zylinders liegen.

Nach dem erfindungsgemäßen Verfahren wird vorteilhaft ein abgetrenntes Klebeband nach Schritt (ii) erhalten, das in Form einer Tellerrolle mit einer Klebebandbreite von kleiner 10 mm vorliegt, wobei das abgetrennte Klebeband in Form einer Tellerrolle vorliegt, die einem geraden, kreisförmigen Zylinder mit zwei im Wesentlichen planplanaren kreisförmigen äußeren Flächen entspricht.
Die erfindungsgemäß bevorzugten Tellerrollen entsprechen geraden kreisförmigen Zylindern, in denen der Winkel zwischen der Höhe (h) und dem Radius (R) des Zylinders 90° beträgt. Die Höhe der zylindrischen Tellerrolle ist erheblich kleiner als der Radius der zylindrischen Tellerrolle.

Durch die erfindungsgemäße thermische Nachbehandlung des breiten Klebebandes bei 30 bis 60 °C und eine vorzugsweise im Temperaturbereich von 30 bis 50 °C durchgeführte Abtrennung des Klebebandes als Tellerrolle kann erstmals eine planare Tellerrolle mit einer Klebebandbreite von kleiner gleich 8 mm erhalten werden, insbesondere mit einer Klebebandbreite von kleiner gleich 7 mm, bevorzugt kleiner gleich 6 mm, jeweils mit einer Schwankungsbreite von plus/minus 0,1 mm. Somit kann durch die erfindungsgemäße thermische Nachbehandlung das abgetrennte Klebeband nach Schritt (ii) als zu einer archimedischen Spirale aufgerolltes Klebeband in Form einer geraden, kreisförmigen, zylindrischen Tellerrolle, mit einer Klebebandbreite von kleiner gleich 8 mm hergestellt werden, insbesondere mit einer Klebebandbreite von kleiner gleich 7 mm, bevorzugt kleiner gleich 6 mm, jeweils mit einer Schwankungsbreite von plus/minus 0,1 mm.

Dabei erfolgt der Schritt (ii), in dem das Klebeband mit einer Klebebandbreite kleiner 10 mm abgetrennt wird, bevorzugt mit einem rotierenden Messer mit einer Rotationsgeschwindigkeit von 100 bis 1000 U/min, insbesondere mit 150 bis 700 U/min, stärker bevorzugt mit 200 bis 500 U/min, oder - ebenfalls bevorzugt - indem (ii) das Klebeband in Form einer Mutterrolle vorliegt und mindestens eine Tellerrolle, vorzugsweise mehrere Tellerrollen des Klebebandes mit einer Klebebandbreite kleiner 10 mm abgetrennt werden, indem ein rotierendes Messer auf die im Gegenlauf rotierende Mutterrolle zubewegt wird und die mindestens eine Tellerrolle abgetrennt wird.

Gute Ergebnisse bei der Abtrennung von Tellerrollen konnten erzielt werden, wenn die Rotationsgeschwindigkeit der Messer 200-500 U/min betrug und die Welle, auf der die Mutterrolle angeordnet ist, mit 400-600 U/min rotiert. Es wurden verschiedene Vorschubgeschwindigkeiten zwischen 5-15 mm/sec sowie der Betrieb im Gegenlauf getestet. Als Messer werden bevorzugt sogenannte Hochleistungs-Schnellschnitt-Stahlmesser (HSS-Messer) eingesetzt.

Ohne die erfindungsgemäße Behandlung lag der untere Grenzwert der Klebebandbreite der Tellerrollen synonym zur Rollenbreite bei 10 mm. Bei kleineren Klebebandbreiten verschoben sich ohne die erfindungsgemäße Nachbehandlung die einzelnen Klebebandlagen deutlich gegeneinander, so dass keine Tellerrollen mit einer Klebebandbreite kleiner 10 mm, vorzugsweise kleiner gleich 9 mm, hergestellt werden konnten.

Ebenfalls offenbart wird ein Verfahren zur Herstellung eines Klebebandes, indem bei einem breiten Klebeband, insbesondere in Form einer Mutterrolle, umfassend eine Haftklebeschicht eines geschäumten und zumindest teilweise thermisch vernetzten Massesystems, das in Bezug auf die Gesamtmasse des Massesystems zu größer gleich 30 Gew.-% mindestens ein Polymer enthält, wobei das breite Klebeband eine Höhe von mindestens 150 µm aufweist, (a) thermisch reversibel die Klebkraft bei einer Temperatur von 30 bis 60 °C verstärkt wird, insbesondere bei 30 - 50 °C, und (b) von dem breiten Klebeband bei einer Temperatur von 30 bis 50 °C, insbesondere von einer Mutterrolle des breiten Klebebandes, ein Klebeband, insbesondere eine Tellerrolle eines Klebebandes, mit einer Klebebandbreite kleiner 10 mm abgetrennt wird; insbesondere wird eine Tellerrolle des Klebebandes mit einer Klebebandbreite kleiner 10 mm erhalten. Die Tellerrolle erfüllt die vorgenannten Anforderungen an die Planplanarität der äußeren kreisförmigen seitlichen Flächen eines geraden, kreisförmigen Zylinders.

Offenbart wird auch ein Verfahren zur Herstellung eines Klebebandes, umfassend die Schritte:
(1) Herstellung des geschäumten Massesystems enthaltend thermisch empfindliche Substanzen, bei dem das Massesystem in einem ersten Schritt bei einer ersten Temperatur geschäumt wird, und thermisch empfindliche Substanzen, insbesondere thermische Vernetzer, in einem folgenden Schritt bei einer zweiten, niedrigeren Temperatur als der ersten Temperatur zu dem Massesystem gegeben werden; insbesondere entspricht die erste Temperatur, bei der das Massesystem geschäumt wird, der Expansionstemperatur der Mikroballons oder liegt über der Expansionstemperatur und die zweite Temperatur, bei der die thermisch empfindlichen Substanzen, insbesondere die thermischen Vernetzer, zu dem Massesystem gegeben werden, liegt unter der Expansionstemperatur der Mikroballons,
(2) vorteilhaft wird das geschäumte Massesystem vor oder während der nur teilweisen thermischen Vernetzung zu einer Haftklebeschicht ausgeformt, insbesondere auf einem Träger- oder Releasematerial, vorzugsweise zu einem bahnförmigen breiten Klebeband,
(3) vorzugweise wird in einem nachfolgenden Schritt das Massesystem thermisch vernetzt oder thermisch weiter vernetzt, optional erfolgt ein Zuschneiden der flächigen Haftklebeschichten zu bahnförmigen breiten Klebebändern,
(4) vorteilhaft wird das breite Klebeband umfassend die Haftklebeschicht des geschäumten und zumindest teilweise thermisch vernetzten Massesystems zu einer Mutterrolle aufgerollt und
(5) nachfolgend wird das breite Klebeband umfassend eine Haftklebeschicht eines geschäumten und zumindest teilweise thermisch vernetzten Massesystems, das in Bezug auf die Gesamtmasse des Massesystems zu größer gleich 30 Gew.-% mindestens ein Polymer enthält, wobei das Klebeband eine Höhe von mindestens 150 µm aufweist, (i) nachbehandelt, indem das breite Klebeband in Form der Mutterrolle thermisch bei 30 - 60 °C nachbehandelt wird, und (ii) von dem breiten Klebeband, insbesondere bei 30 bis 50 °C, d.h. von dem warmen breiten Klebeband, ein Klebeband mit einer Klebebandbreite kleiner 10 mm abgetrennt, wobei vorzugsweise eine gerade, kreisförmig zylindrische Tellerrolle mit einer Klebebandbreite kleiner 10 mm erhalten wird.

Vorzugsweise wird das breite Klebeband oder die Mutterrolle homogen erwärmt und in diesem Zustand in Tellerrollen geschnitten. Zu niedrige Temperaturen wirken sich nachteilig auf die Behandlungsdauer oder den Tack aus.

Offenbart wird auch ein Verfahren zur Herstellung eines Klebebandes, das vor der erfindungsgemäßen thermischen Nachbehandlung gemäß dem nachfolgenden Verfahren hergestellt und auf einer Mutterrolle bereitgestellt wird.

Dazu wird das Massesystem zunächst in einem ersten Schritt bei einer ersten Temperatur geschäumt und in einem folgenden Schritt bei einer zweiten, niedrigeren Temperatur als der ersten Temperatur, werden thermisch empfindliche Substanzen, insbesondere die vorgenannten thermischen Vernetzer, zu dem Massesystem zugegeben.

Vorteilhaft wird das Massesystem in einem ersten Schritt geschäumt, insbesondere durch Expansion von Mikroballons bei der hierzu erforderlichen Temperatur. Die thermisch empfindlichen Substanzen werden in einem folgenden Verfahrensschritt bei einer niedrigeren Temperatur dem Massesystem beigemischt, insbesondere also einer Temperatur, die unter der Expansionstemperatur der Mikroballons liegt, besonders vorteilhaft bei einer Temperatur, die für die thermisch empfindlichen Substanzen unkritisch ist.

Auch für thermisch sehr empfindliche Substanzen ist diese Vorgehensweise geeignet. Erreicht man beim Abkühlen auf eine niedrigere Temperatur keine Temperatur, die für die thermisch empfindlichen Substanzen bereits unkritisch ist, so kann die Zeit von der Zugabe der thermisch empfindlichen Substanzen bis zur Ausformung des Massesystems jedoch minimiert werden, so dass Nebenreaktionen, eine Zersetzung der thermisch empfindlichen Substanzen oder anderweitige, ungewollte Reaktionen dieser Substanzen auf ein Minimum reduziert werden können.

Als Mischaggregate eignen sich insbesondere kontinuierlich arbeitende Mischaggregate wie zum Beispiel Planetwalzenextruder. In diesem Extruder können die Komponenten zur Herstellung des Massesystems vorgelegt werden und insbesondere aufgeschmolzen werden. Es besteht erfindungsgemäß die Möglichkeit, vorgefertigte lösemittelfreie Masse durch Förderextruder, wie zum Beispiel Einschneckenextruder, oder durch eine Fassschmelze in das Maischaggregat, insbesondere den Planetwalzenextruder, mittels Einspritzung vorzulegen und die Mikroballons im Einzugsbereich des Planetwalzenextruders dazu zu dosieren.

Das aufgeschäumte und mit thermisch empfindlichen Substanzen versehene Massesystem wird in einer vorteilhaften Vorgehensweise thermisch vernetzt; insbesondere wenn die thermisch empfindlichen Substanzen thermische Vernetzer und/oder Beschleuniger sind, ein thermisches Vernetzersystem oder die vorgenannten Komponenten umfassen. Die thermische Vernetzung kann insbesondere vorteilhaft nach der Ausformung zur Schicht, insbesondere auf einem Träger- oder Releasematerial, stattfinden. Anschließend kann die Schicht zur Mutterrolle aufgerollt werden.

Offenbart werden auch Tellerrollern umfassend ein hierin beschriebenes Klebeband oder ein Klebeband erhältlich nach den erfindungsgemäßen Verfahren, wobei die Tellerrolle ein als archimedische Spirale aufgerolltes Klebeband mit einer Klebebandbreite von kleiner 10 mm ist. Diese Tellerrolle entspricht einem geraden kreisförmigen Zylinder, dessen Höhe (h) deutlich kleiner als der Radius (R), d.h. h << R, des kreisförmigen Zylinders ist, d.h. die aufgerollten Klebebänder liegen in ihrer Klebebandbreite genau übereinander, es bilden sich zwei planplanare kreisförmige Ebenen.

Optional kann das Klebeband auch pulver- und/oder granulatförmige Füllstoffe, Farbstoffe und Pigmente, insbesondere auch abrasive und verstärkende Füllstoffe wie zum Beispiel Kreiden (CaCO₃), Titandioxide, Zinkoxide und Ruße zu Anteilen von 0,1 bis 15 Gew.-%, bezogen auf die Gesamtmasse des Klebebandes, enthalten. Sehr bevorzugt werden verschiedene Kreideformen als Füllstoff eingesetzt, wobei besonders bevorzugt Mikrosöhl-Kreide eingesetzt wird. Bei bevorzugten Anteilen der Füllstoffe von bis zu 10 Gew.-%, bezogen auf die Gesamtmasse des Klebebandes, verändern sich die klebtechnischen Eigenschaften (Scherfestigkeit bei RT, Sofortklebkraft auf Stahl und PE) durch den Füllstoffzusatz praktisch nicht.

Weiterhin können schwerentflammbare Füllstoffe wie beispielsweise Ammoniumpolyphosphat; elektrisch leitfähige Füllstoffe wie beispielsweise Leitruß, Kohlenstofffasern und/oder silberbeschichtete Kugeln; thermisch leitfähige Materialien wie beispielsweise Bornitrid, Aluminiumoxid, Siliciumcarbid; ferromagnetische Additive wie beispielsweise Eisen-(III)-oxide; weitere Additive zur Volumenerhöhung, insbesondere zur Herstellung geschäumter Schichten beziehungsweise syntaktischer Schäume, wie beispielsweise Blähmittel, Glasvollkugeln, Glashohlkugeln, carbonisierte Mikrokugeln, phenolische Mikrohohlkugeln, Mikrokugeln aus anderen Materialien; Kieselsäure, Silicate, organisch nachwachsende Rohstoffe wie beispielsweise Holzmehl, organische und/oder anorganische Nanopartikel, Fasern; Alterungsschutzmittel, Lichtschutzmittel, Ozonschutzmittel und/oder Compoundierungsmittel in dem Klebeband enthalten sein. Als Alterungsschutzmittel können bevorzugt sowohl primäre, z.B. 4-Methoxyphenol oder Irganox® 1076, als auch sekundäre Alterungsschutzmittel, z.B. Irgafos® TNPP oder Irgafos® 168 der Firma BASF, gegebenenfalls auch in Kombination miteinander, eingesetzt werden. Als weitere Alterungsschutzmittel können Phenothiazin (C-Radikalfänger) sowie Hydrochinonmethylether in Gegenwart von Sauerstoff sowie Sauerstoff selbst eingesetzt werden.

Das Klebeband kann auf einer oder beiden Seiten mit einem Releaseliner, im Folgenden auch kurz als "Liner" bezeichnet, zum Schutz der Klebmassenoberfläche während des Transports oder bei der Lagerung bedeckt sein. Der Liner umfasst bevorzugt ein Polyolefin, kann aber noch weitere zusätzliche Polymere beziehungsweise Polymerschichten aufweisen, welche zur Verbesserung der Temperaturstabilität, der Anschmiegsamkeit und/oder der Verformbarkeit beitragen. Die Verformbarkeit ist insbesondere wichtig bei Rundverklebungen, bei denen der Liner noch nicht entfernt werden soll.

Besonders bevorzugt ist der Releaseliner, ein temperaturbeständiger Releaseliner. Darunter wird verstanden, dass der Liner Verarbeitungstemperaturen von bis zu 170 °C ohne wesentliche Einschränkung seiner Anwendungseigenschaften standhält.

Die hierin beschriebenen Klebebänder, insbesondere als Transfertapes oder dreischichtige Klebebänder, können in einer Vielzahl von Anwendungen eingesetzt werden, so zum Beispiel in der Bauindustrie, in der Elektronikindustrie, beispielsweise in Bildschirmverklebungen, im Heimwerkerbereich, in der Autoindustrie, im Schiffs-, Boots- und Eisenbahnbau, für Haushaltsgeräte, Möbel und dergleichen. Vorteilhafte Anwendungen sind beispielsweise das Verkleben von Leisten und Emblemen in den vorgenannten Bereichen, das Verkleben von Versteifungsprofilen bei Fahrstühlen, das Verkleben von Bauteilen und Produkten in der Solarindustrie, die Rahmenverklebung bei elektronischen Konsumgütern, wie Fernsehern und dergleichen, Außenverklebungen bei Automobilen (beispielsweise Stoßfänger) sowie Verklebungen bei der Schilderherstellung.

Im Bauwesen sind beispielsweise Anwendungen als Isolierbänder, Korrosionsschutzbänder, Aluminiumklebebänder, Bauspezialklebebänder, zum Beispiel Dampfsperren und Montageklebebänder, von Bedeutung. Die Klebebänder können zur kontinuierlichen, automatischen Verklebung von der Tellerrolle sehr kleiner Bauteile, vorteilhaft von mikroelektronischen Bauteilen, verwendet werden.

Die Erfindung wird anhand des nachfolgenden Beispiels näher erläutert, ohne die Erfindung auf diese Ausführung zu beschränken.

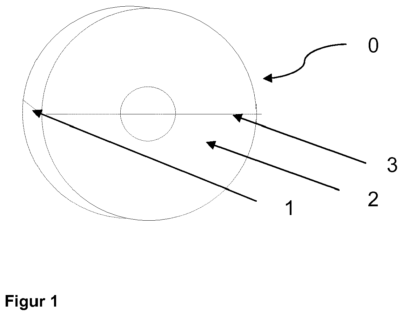

- Figur 1:: Schematische Darstellung einer Tellerrolle (0) in Form eines geraden, kreisförmigen Zylinders (0) mit Klebebandbreite (1), kreisförmiger, planplanarer Fläche (2) und Durchmesser (3).

### Ausführungsbeispiel:

In der Produktion der Polyacrylat-basierter Klebebänder traten beim Abstecharbeitsgang Qualitätsprobleme auf, wenn versucht wurde Tellerrollen der Klebebänder mit einer Klebebandbreite kleiner 10 mm und einer Lauflänge von etwa 66 m abzutrennen. Die Tellerrollen der genannten Klebebandbreite von kleiner 10 mm konnten nicht zu verwendbaren Tellerrollen geschnitten werden, da sich die einzelnen Lagen des aufgerollten Klebebandes, beim Versuch die Tellerrolle abzuschneiden, gegeneinander verschoben. Ein Abstechen der Materialien in 10 mm war unter Standardeinstellungen und ohne die beschriebenen Qualitätsprobleme nicht möglich.

Untersuchtes Klebeband: Einschichtiges Polyacrylat-Klebeband, bestehend aus einem geschlossenzelligen Polyacrylatschaum, mittlere Schaumdichte 1200 µm.

Zusammensetzung des Poylacrylats:
68 Gew.-% 2-Ethylhexylacrylat
25 Gew.-% Methylacrylat
7 Gew.-% Acrylsäure
0,4 Gew.-% Polymerisationsinitiatoren
0,2 Gew.-% Antioxidantien

Zusammensetzung der geschäumten Masse:
69,5 Gew.-% Polyacrylat
28,5 Gew.-% Terpenphenolharz
1 Gew.-% Pigment (Carbon black)
0,7 Gew.-% Mikrosphären (Expancel 051 DU 40)
0,3 Gew.-% Vernetzer-Beschleuniger-System (Epoxid-Amin)

Die Herstellung des Klebebandes erfolgte über ein Extrusions-Schäumungs-Verfahren. Die geschäumte Masse wurde auf einen silikonisierten HDPE-Liner aufgetragen. Es wurden Mutterrollen mit einer Breite von 300 mm und 66 m Lauflänge hergestellt, die zunächst auf Raumtemperatur gebracht wurden.

Es wurden nun zwei Mutterrollen bei 50 °C über 15 h gelagert. Von den auf diese Weise getemperten Mutterrollen wurden Abstechversuche zur Herstellung von Tellerrollen mit geringer Klebebandbreite durchgeführt.

Die Abstechversuche wurden mit unterschiedlichen Einstellungen hinsichtlich Rotationsgeschwindigkeit des Messers (200-500 U/min) und der Welle (400-600 U/min), auf der die Mutterrolle aufgespannt wurde, verschiedener Vorschubgeschwindigkeiten (5-15 mm/sec) und Betrieb im Gegenlauf durchgeführt.

Von den thermisch nachbehandelten Mutterrollen gelang es Tellerrollen mit planplanarer Ebene und einer Rollenbreite, d.h. einer Klebebandbreite, von deutlich unter 10 mm abzutrennen. Von den warmen Mutterrollen wurden Tellerrollen im warmen Zustand (50 bis minimal 30 °C) abgestochen, diese wiesen auch nach dem Auskühlen eine gute Planlage auf. Von den getemperten Mutterrollen konnten ohne weiteres Tellerrollen mit einer Klebebandbreite von 6 mm in guter Qualität hergestellt werden. Optimale Ergebnisse wurden mit folgenden Parametern erhalten:
Rotationsgeschwindigkeit Messer: 500 U/min
Rotationsgeschwindigkeit Welle: 600 U/min
Vorschub: 10 mm/s.

Am folgenden Tag wurde der unter Temperierung gut zu verarbeitende Ballen nochmals unter Raumtemperatur abgestochen. In diesem Fall war erneut das Verschieben der einzelnen Lagen zu beobachten. Einzig war ein Abstechen von Rollen in einer Breite von 10 mm möglich.

Die Herstellung der Tellerrollen mit Klebebandbreiten kleiner 10 mm bis kleiner gleich 6 mm gelingt also sehr gut, wenn von den temperierten Mutterrollen Tellerrollen abgetrennt werden.

## Patentansprüche

1. Verfahren zur Herstellung eines Klebebandes, indem
ein breites Klebeband umfassend eine Haftklebeschicht eines geschäumten und zumindest teilweise thermisch vernetzten Massesystems, das in Bezug auf die Gesamtmasse des Massesystems zu größer gleich 30 Gew.-% mindestens ein Polymer enthält, wobei das breite Klebeband eine Höhe von mindestens 150 µm aufweist,
(i) thermisch bei 30 - 60 °C nachbehandelt wird, und
(ii) ein Klebeband mit einer Klebebandbreite kleiner 10 mm bei einer Temperatur des breiten Klebebandes von 30 bis 50 °C abgetrennt wird.

2. Verfahren nach Anspruch 1, **dadurch gekennzeichnet, dass** das breite Klebeband mindestens eine Stunde thermisch nachbehandelt wird.

3. Verfahren nach Anspruch 1 oder 2, **dadurch gekennzeichnet, dass** das breite Klebeband aufgerollt auf einer Mutterrolle thermisch nachbehandelt wird.

4. Verfahren nach einem der Ansprüche 1 bis 3, **dadurch gekennzeichnet, dass** das breite Klebeband in dem geschäumten Massesystem zumindest teilweise expandierte und/oder vollständig expandierte Mikroballons umfasst.

5. Verfahren nach einem der Ansprüche 1 bis 4, **dadurch gekennzeichnet, dass** das breite Klebeband zur Durchführung der Schritte (i) und/oder (ii) in Form einer Mutterrolle vorliegt, insbesondere mit einer Lauflänge von mindestens 10 bis 1000 m, vorzugsweise mit 20 bis 100 m, und von der Mutterrolle des breiten Klebebandes mindestens eine Tellerrolle des Klebebandes mit einer Klebebandbreite von kleiner 10 mm abgetrennt wird.

6. Verfahren nach einem der Ansprüche 1 bis 5, **dadurch gekennzeichnet, dass** das abgetrennte Klebeband nach Schritt (ii) in Form einer Tellerrolle (0) mit einer Klebebandbreite (1) von kleiner 10 mm vorliegt und das abgetrennte Klebeband in Form einer Tellerrolle, die einem geraden, kreisförmigen Zylinder (0) mit zwei im Wesentlichen planplanaren kreisförmigen äußeren Flächen (2) entspricht, vorliegt.

7. Verfahren nach einem der Ansprüche 1 bis 6, **dadurch gekennzeichnet, dass** das abgetrennte Klebeband nach Schritt (ii) in Form einer Tellerrolle mit einer Klebebandbreite von kleiner gleich 8 mm vorliegt, insbesondere mit einer Klebebandbreite von kleiner gleich 7 mm, bevorzugt kleiner gleich 6 mm, jeweils mit einer Schwankungsbreite von plus/minus 0,1 mm.

8. Verfahren nach einem der Ansprüche 1 bis 7, **dadurch gekennzeichnet, dass** (ii) das Klebeband mit einer Klebebandbreite kleiner 10 mm mit einem rotierenden Messer mit einer Rotationsgeschwindigkeit von 100 bis 1000 U/min abgetrennt wird, insbesondere mit 150 bis 700 U/min, bevorzugt mit 200 bis 500 U/min, oder (ii) das breite Klebeband in Form einer Mutterrolle vorliegt und Tellerrollen des Klebebandes mit einer Klebebandbreite kleiner 10 mm abgetrennt werden, indem ein rotierendes Messer auf die im Gegenlauf rotierende Mutterrolle zubewegt wird und mindestens eine Tellerrolle abgetrennt wird.

## Claims

1. Method for producing an adhesive tape, wherein
a wide adhesive tape comprising a pressure-sensitive adhesive layer of a foamed and at least partly thermally crosslinked adhesive system, comprising 30 wt% or more of at least one polymer, relative to the total mass of the adhesive system, the wide adhesive tape having a height of at least 150 µm,
(i) is thermally aftertreated at 30-60°C, and
(ii) an adhesive tape having an adhesive tape width of less than 10 mm is separated off at a temperature of the wide adhesive tape of 30 to 50°C.

2. Method according to Claim 1, **characterized in that** the wide adhesive tape is thermally aftertreated for at least an hour.

3. Method according to Claim 1 or 2, **characterized in that** the wide adhesive tape is thermally aftertreated while wound up into a parent roll.

4. Method according to any of Claims 1 to 3, **characterized in that** the wide adhesive tape comprises at least partly expanded and/or fully expanded microballoons in the foamed adhesive system.

5. Method according to any of Claims 1 to 4, **characterized in that** the wide adhesive tape, for the implementation of steps (i) and/or (ii), is in the form of a parent roll, in particular having a running length of at least 10 to 1000 m, preferably of 20 to 100 m, and, from the parent roll of the wide adhesive tape, at least one pancake roll of the adhesive tape is separated off, having an adhesive tape width of less than 10 mm.

6. Method according to any of Claims 1 to 5, **characterized in that** the adhesive tape separated off after step (ii) is in the form of a pancake roll (0) having an adhesive tape width (1) of less than 10 mm, and the adhesive tape separated off is in the form of a pancake roll corresponding to a straight, circular cylinder (0) having two substantially plane-planar circular outer faces (2).

7. Method according to any of Claims 1 to 6, **characterized in that** the adhesive tape separated off after step (ii) is in the form of a pancake roll having an adhesive tape width of less than or equal to 8 mm, especially having an adhesive tape width of less than or equal to 7 mm, preferably less than or equal to 6 mm, in each case with a fluctuation range of plus/minus 0.1 mm.

8. Method according to any of Claims 1 to 7, **characterized in that** (ii) the adhesive tape having an adhesive tape width of less than 10 mm is separated off with a rotating knife having a rotational velocity of 100 to 1000 rpm, especially of 150 to 700 rpm, preferably of 200 to 500 rpm, or (ii) the wide adhesive tape is in the form of a parent roll, and pancake rolls of the adhesive tape having an adhesive tape width of less than 10 mm are separated off by moving a rotating knife toward the counter-rotating parent roll and separating off at least one pancake roll.

## Revendications

1. Procédé de fabrication d'une bande adhésive, selon lequel
une bande adhésive large comprenant une couche adhésive de contact d'un système de matière moussé et au moins partiellement réticulé thermiquement, qui contient par rapport à la masse totale du système de matière une quantité supérieure ou égale à 30 % en poids d'au moins un polymère, la bande adhésive large présentant une hauteur d'au moins 150 µm,
(i) est post-traitée thermiquement à 30 à 60 °C, et
(ii) une bande adhésive d'une largeur de bande adhésive inférieure à 10 mm est séparée à une température de la bande adhésive large de 30 à 50 °C.

2. Procédé selon la revendication 1, **caractérisé en ce que** la bande adhésive large est post-traitée thermiquement pendant au moins une heure.

3. Procédé selon la revendication 1 ou 2, **caractérisé en ce que** la bande adhésive large est post-traitée thermiquement enroulée sur un rouleau-mère.

4. Procédé selon l'une quelconque des revendications 1 à 3, **caractérisé en ce que** la bande adhésive large comprend dans le système de matière moussé des microballons au moins partiellement expansés et/ou entièrement expansés.

5. Procédé selon l'une quelconque des revendications 1 à 4, **caractérisé en ce que** la bande adhésive large se présente pour la réalisation des étapes (i) et/ou (ii) sous la forme d'un rouleau-mère, notamment d'une longueur d'au moins 10 à 1 000 m, de préférence de 20 à 100 m, et au moins un rouleau disque de la bande adhésive ayant une largeur de bande adhésive inférieure à 10 mm est séparé du rouleau-mère de la bande adhésive large.

6. Procédé selon l'une quelconque des revendications 1 à 5, **caractérisé en ce que** la bande adhésive séparée selon l'étape (ii) se présente sous la forme d'un rouleau disque (0) ayant une largeur de bande adhésive (1) inférieure à 10 mm et la bande adhésive séparée se présente sous la forme d'un rouleau disque qui correspond à un cylindre circulaire droit (0) ayant deux surfaces extérieures circulaires essentiellement planes (2).

7. Procédé selon l'une quelconque des revendications 1 à 6, **caractérisé en ce que** la bande adhésive séparée selon l'étape (ii) se présente sous la forme d'un rouleau disque ayant une largeur de bande adhésive inférieure ou égale à 8 mm, notamment ayant une largeur de bande adhésive inférieure ou égale à 7 mm, de préférence inférieure ou égale à 6 mm, à chaque fois avec une largeur de fluctuation de plus/moins 0,1 mm.

8. Procédé selon l'une quelconque des revendications 1 à 7, **caractérisé en ce que** (ii) la bande adhésive est séparée avec une largeur de bande adhésive inférieure à 10 mm avec une lame rotative à une vitesse de rotation de 100 à 1 000 tours/minute, notamment de 150 à 700 tours/minute, de préférence de 200 à 500 tours/minute, ou (ii) la bande adhésive large se présente sous la forme d'un rouleau-mère et des rouleaux disques de la bande adhésive sont séparés avec une largeur de bande adhésive inférieure à 10 mm par déplacement d'une lame rotative sur le rouleau-mère tournant dans la direction opposée et séparation d'au moins un rouleau disque.
